# EUROPEAN PATENT APPLICATION

(11) **EP 3 721 740 A1**
(43) Date of publication of application: **14.10.2020**
(21) Application number: 18885239.6
(22) Date of filing: 06.12.2018
(51) Int. Cl.: A44C 5/00, G08C 17/02

(54) **WEARABLE DEVICE WITH VEHICLE-FINDING FUNCTION**

(30) Priority: 06.12.2017 CN 201711278160
(71) Applicant: BYD Company Limited, Shenzhen, Guangdong 518118 (CN)
(72) Inventor: ZHANG, Ge, Shenzhen Guangdong 518118 (CN); WU, Lihua, Shenzhen Guangdong 518118 (CN); YANG, Jianxing, Shenzhen Guangdong 518118 (CN); YANG, Dongsheng, Shenzhen Guangdong 518118 (CN)
(74) Representative: Arnold & Siedsma
(86) International application number: PCT/CN2018/119587
(87) International publication number: WO 2019/109979

(57) **Abstract**

The present disclosure discloses a wearable device with a vehicle searching function. The wearable device includes: an upper housing assembly; a lower housing assembly; an antenna assembly including a first antenna and a second antenna, the first antenna being constructed as an annular frame of the upper housing assembly, the second antenna being disposed between the upper housing assembly and the lower housing assembly, a projection area of the second antenna on the upper housing assembly being located within the annular frame constructed by the first antenna, and the second antenna being configured to: determine, according to the activation request signal after receiving an activation request signal sent by a vehicle, whether the wearable device matches the vehicle, and activate a transmission function of the first antenna when the wearable device matches the vehicle; an interaction assembly configured to receive a user instruction; and a control assembly configured to generate a vehicle searching instruction according to the user instruction, and control, according to the vehicle searching instruction, the first antenna to send a high-frequency signal to the vehicle, to implement the vehicle searching function. Therefore, the user can find his/her own vehicle quickly at a greater distance, greatly improving user experience.

## Description

### CROSS-REFERENCE TO RELATED APPLICATIONS

The present disclosure claims priority to Chinese Patent Application No. 201711278160.2, filed on December 6, 2017, which is incorporated herein by reference in its entirety.

### FIELD

The present disclosure relates to the technical field of wearable devices, and in particular, to a wearable device with a vehicle searching function.

### BACKGROUND

A smart bracelet is a kind of wearable smart device. As a technology product that receives much attention from users currently, powerful functions are quietly applied to our life and changing people's lives. In addition, with the emergence of a smart key, a driver is allowed to enter a vehicle without a key, thereby improving user experience. If a car key and a smart wearable technology are integrated to design a smart bracelet key, the user can easily get rid of the trouble of forgetting to take the car key, and the smart bracelet key can completely replace a traditional car key.

At present, there are very few smart bracelets for a car on the market. According to a survey, it may be learned that only a few car companies have launched the smart bracelet key. In addition to sports bracelet functions of the entire car, the bracelet key can also realize unlocking and locking of a car door, start-up of the vehicle, or the like. However, the bracelet key lacks a remote car searching function, which may make it difficult for many car owners wearing the bracelet key to find their own vehicles quickly due to a large number of vehicles in a parking lot, greatly reducing the convenience for users.

### SUMMARY

The present disclosure is intended to resolve at least one of the foregoing technical problems in the foregoing technology to a certain extent. To this end, one objective of the present disclosure is to provide a wearable device with a vehicle searching function, which can allow a user to find his/her own vehicle quickly at a greater distance, greatly improving user experience.

To this end, the present disclosure proposes a wearable device with a vehicle searching function, including: an upper housing assembly; a lower housing assembly; an antenna assembly including a first antenna and a second antenna, the first antenna being constructed as an annular frame of the upper housing assembly, the second antenna being disposed between the upper housing assembly and the lower housing assembly, a projection area of the second antenna on the upper housing assembly being located within the annular frame constructed by the first antenna, and the second antenna being configured to: determine, according to an activation request signal, after receiving the activation request signal sent by a vehicle, whether the wearable device matches the vehicle, and activate a transmission function of the first antenna when determining that the wearable device matches the vehicle; an interaction assembly configured to receive a user instruction; and a control assembly configured to generate a vehicle searching instruction according to the user instruction, and control, according to the vehicle searching instruction, the first antenna to send a high-frequency signal to the vehicle to implement the vehicle searching function.

According to the wearable device with a vehicle searching function according to an embodiment of the present disclosure, the antenna assembly includes the first antenna and the second antenna, the first antenna being constructed as the annular frame of the upper housing assembly, and the second antenna being disposed between the upper housing assembly and the lower housing assembly. The control assembly may generate a vehicle searching instruction according to a user instruction, and control, according to the vehicle searching instruction, the first antenna to send the high-frequency signal to the vehicle to implement the vehicle searching function. In this way, a user can find his/her own vehicle quickly at a greater distance, greatly improving user experience.

Other aspects and advantages of the present disclosure will be given in the following description, some of which will become apparent from the following description or may be learned from practices of the present disclosure.

### BRIEF DESCRIPTION OF THE DRAWINGS

FIG. 1 is a schematic block diagram of a wearable device with a vehicle searching function according to an embodiment of the present disclosure.
FIG. 2 is a schematic structural diagram of a wearable device with a vehicle searching function according to one embodiment of the present disclosure.
FIG. 3 is a schematic structural diagram of an antenna assembly according to one embodiment of the present disclosure.
FIG. 4 is a schematic structural diagram of an antenna assembly according to another embodiment of the present disclosure.
FIG. 5 is a schematic block diagram of a wearable device with a vehicle searching function according to one embodiment of the present disclosure.
FIG. 6 is a schematic structural diagram of a lower housing assembly according to one embodiment of the present disclosure.
FIG. 7 is a schematic block diagram of a wearable device with a vehicle searching function according to other embodiments of the present disclosure.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

A wearable device with a vehicle searching function in an embodiment of the present disclosure is described below with reference to the accompanying drawings.

In one embodiment of the present disclosure, the wearable device may be a bracelet.

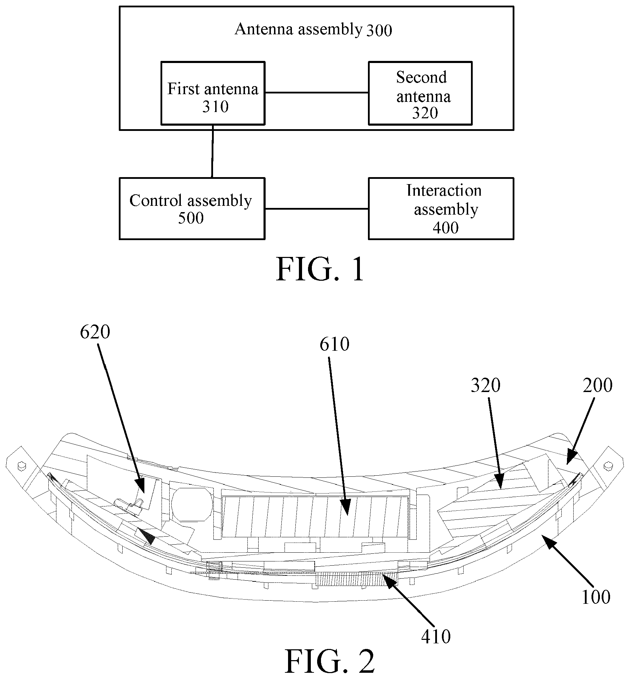

FIG. 1 is a schematic block diagram of a wearable device with a vehicle searching function according to an embodiment of the present disclosure.

With reference to FIG. 1 and FIG. 2, the wearable device with the vehicle searching function in the embodiment of the present disclosure includes an upper housing assembly 100, a lower housing assembly 200, an antenna assembly 300, an interaction assembly 400, and a control assembly 500.

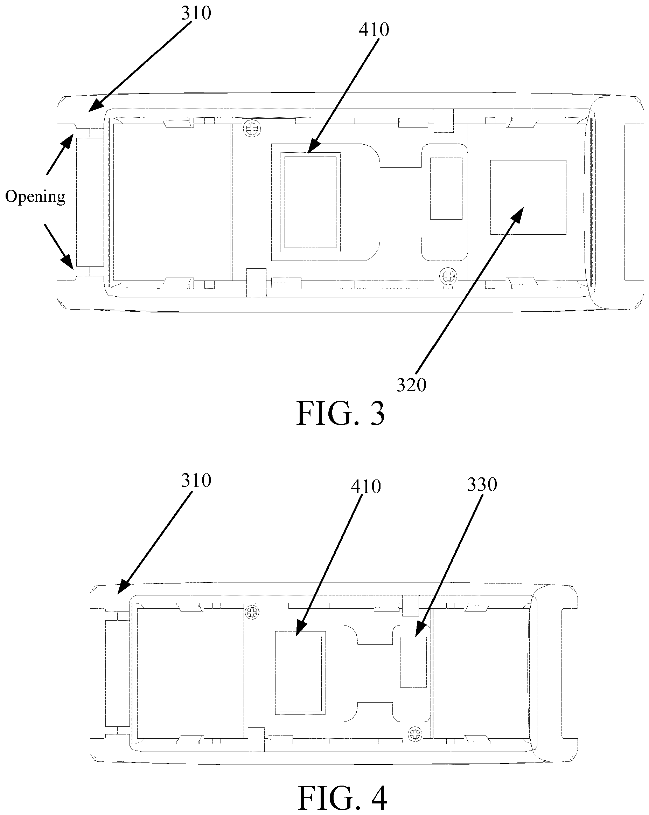

The antenna assembly 300 includes a first antenna 310 and a second antenna 320. As shown in FIG. 3, the first antenna 310 is constructed as an annular frame of the upper housing assembly 100. The second antenna 320 is disposed between the upper housing assembly 100 and the lower housing assembly 200. A projection area of the second antenna 320 on the upper housing assembly 100 is located within the annular frame constructed by the first antenna 310. The second antenna 320 is configured to determine, according to the activation request signal after receiving an activation request signal (the activation request signal may be a control signal) sent by a vehicle, whether the wearable device matches the vehicle, and activate a transmission function of the first antenna 310 when determining that the wearable device matches the vehicle. The interaction assembly 400 is configured to receive a user instruction. The control assembly 500 is configured to generate a vehicle searching instruction according to the user instruction, and control, according to the vehicle searching instruction, the first antenna to send a high-frequency signal to the vehicle to implement the vehicle searching function.

In one embodiment of the present disclosure, a metal and plastic combining process (nano-injection molding) may be adopted to construct the first antenna 310 into the annular frame of the upper housing assembly 100, that is, the first antenna 310 may serve as the annular frame (a metal frame) of the upper housing assembly 100, so that the first antenna 310 may be completely exposed to the outside without any structural shelter. Therefore, a clearance area of the first antenna 310 is not only increased, greatly improving signal field strength of the first antenna 310, that is, increasing an effective range of signals transmitted by the first antenna 310, but also a length of the first antenna 310 (the length may reach more than 120 mm) is increased, to further improve strength of the signals transmitted by the first antenna 310, that is, extend the effective range of signals transmitted by the first antenna 310. Consequently, the vehicle can still receive a high-frequency signal (for example, a high-frequency signal with a frequency of 315 MHz) sent by the first antenna 310 at a greater distance. For example, a maximum effective range of the high-frequency signal sent by the first antenna 310 to the vehicle may be 20 m to 30 m.

The annular frame constructed by the first antenna 310 may include at least one opening passing through an outer ring and an inner ring of the annular frame. The inner ring of the annular frame may be an inner side of the annular frame. The outer ring of the annular frame may be an outer side of the annular frame. In other words, at least one notch (opening) may be reserved on the annular frame (the first antenna 310), so that other communication devices inside the annular frame can directly communicate with the outside through the notch, which greatly reduces interference of the first antenna 310 to the communication devices.

The opening passing through the outer ring and the inner ring of the annular frame may be located at any position of the annular frame. Preferably, as shown in FIG. 3, the annular frame constructed by the first antenna 310 may be provided with two openings. It should be noted that, considering the strength of the signal transmitted by the first antenna 310 and bonding strength of the upper housing assembly 100, the two openings provided on the annular frame may include one that completely passes through the outer ring and the inner ring of the annular frame and the other that does not completely pass through the annular frame (that can ensure a length of the first antenna 310 and improve the bonding strength of the upper housing assembly 100).

In one embodiment of the present disclosure, the second antenna 320 may be a low-frequency antenna to receive an activation request signal (a low-frequency signal) sent by the vehicle, and after the activation request signal is received, it is determined whether a wearable device can match the vehicle according to the activation request signal, that is, identity identification is performed on the wearable device. Only after it is determined that the wearable device matches the vehicle, the first antenna 310 can send a corresponding control signal to the vehicle. The second antenna 320 may be an inductor.

Specifically, when a user controls a vehicle to be turned off and is ready to leave the vehicle, the vehicle may be controlled, through a corresponding button provided on a steering wheel of the vehicle, to send an activation request signal to a wearable device, or after detecting that the user leaves the vehicle, the vehicle may automatically send the activation request signal to the wearable device. The wearable device may receive the activation request signal through the second antenna 320, and compare the activation request signal with a signal pre-stored in the second antenna 320. If the comparison is successful, then it may be determined that the wearable device matches the vehicle. After it is determined that the wearable device matches the vehicle, the second antenna may send matching information to the first antenna 310. The first antenna 310 may start a transmission function after receiving the matching information. Therefore, it can be accurately determined whether the wearable device matches the vehicle, to avoid a case that other wearable devices operate the vehicle erroneously.

The second antenna 320 may be disposed between the upper housing assembly 100 and the lower housing assembly 200, and a projection area of the second antenna 320 on the upper housing assembly 100 is located within a surrounding area of the first antenna 310. In other words, there is a certain spacing between the second antenna 320 and surrounding objects in the same plane, to avoid interference to the control signal (a low-frequency signal) received by the second antenna 320, thereby ensuring the stability of the control signal received by the second antenna 320. In this way, the second antenna 320 may efficiently activate the transmission function of the first antenna 310 after receiving the control signal sent by the vehicle.

In one embodiment of the present disclosure, the second antenna 320 is disposed in an area away from the opening, so that the first antenna 310 located above the second antenna 320 is a complete ring structure, further optimizing performance of the first antenna 310 and the second antenna 320.

In one embodiment of the present disclosure, the wearable device may further include a third antenna 330. As shown in FIG. 4, the third antenna 330 is disposed within the annular frame constructed by the first antenna 310. The third antenna 330 is used to communicate with a mobile terminal. The third antenna 330 may be a Bluetooth antenna, and the third antenna 330 may communicate with the mobile terminal (such as a mobile phone) in a manner of wireless connection.

Further, the upper housing assembly 100 further includes a bottom bracket located within the annular frame. The third antenna 330 is printed on the bottom bracket. To this end, the third antenna 330 may be located on the outermost structure without being obstructed by any metal or objects that interfere with signals, which greatly improves signal field strength of the third antenna 330, so that the third antenna stably communicates with the mobile terminal.

In one embodiment of the present disclosure, the interaction assembly 400 may include a touch button. The interaction assembly 400 receives a user instruction according to a touch operation performed by a user on the touch button.

In comparison to a physical button, the touch button not only lowers production costs, but also causes protection grade of the wearable device to reach IP67, and has a better waterproof effect. Further, the interaction assembly 400 further includes a display screen 410, where the control assembly 500 is further configured to control, according to a user instruction, the display screen 410 to display a vehicle searching interface.

In one embodiment of the present disclosure, as shown in FIG. 2, the display screen 410 and the second antenna 320 are disposed in different areas and different planes on a circuit board in the wearable device. The display screen 410 is disposed on one side of the circuit board close to the upper housing assembly, the second antenna 320 is disposed on one side of the circuit board close to the lower housing assembly, and the display screen 410 may be a small 0.4-inch screen, so that the display screen 410 can be structurally positioned away from the second antenna to the full extent, thereby avoiding electromagnetic interference to the second antenna 320 caused when the display screen 410 operates, and optimizing the performance of the second antenna 320.

In one embodiment of the present disclosure, the user instruction may include the number of times and a duration for which the user clicks the touch button. Specifically, when the user clicks the touch button once, the control assembly 500 may control the display screen 410 to display the vehicle searching interface. The vehicle searching interface may be used to display a related vehicle searching instruction to inform the user of how to perform a vehicle searching operation. For example, a text reminder "touch and hold the button to search for the vehicle" may be displayed in the vehicle searching interface. When the user needs to search for the vehicle, the user may touch and hold the touch button for a first preset time (for example, touch and hold the touch button for 3 seconds). In this case, the control assembly 500 may generate a vehicle searching instruction, and control, according to the vehicle searching instruction, the first antenna 310 to send a high-frequency signal to the vehicle. When receiving the high-frequency signal, the vehicle may send corresponding response information. For example, the vehicle flashes a headlamp and a tail lamp or makes a sound. Further, path planning from a current location of the user to a location of the vehicle may also be displayed in the vehicle searching interface, so that the user can quickly find the vehicle. Therefore, the vehicle searching function may be implemented.

In one embodiment of the present disclosure, the wearable device may further include a touch display screen. The touch display screen may be used to receive the user instruction. When the user clicks the touch display screen once, the control assembly 500 may control the touch display screen to display the vehicle searching interface. When the user touches and holds the touch button for the first preset time (for example, touches and holds the touch button for 3 seconds), the control assembly 500 may generate a vehicle searching instruction, and control, according to the vehicle searching instruction, the first antenna 310 to send a high-frequency signal to the vehicle to implement the vehicle searching function.

Therefore, through the structure of the wearable device of the foregoing embodiment, long-distance vehicle searching can be implemented. For example, if a wearable device is 30 m to 50 m away from a corresponding vehicle, the vehicle can still be quickly found.

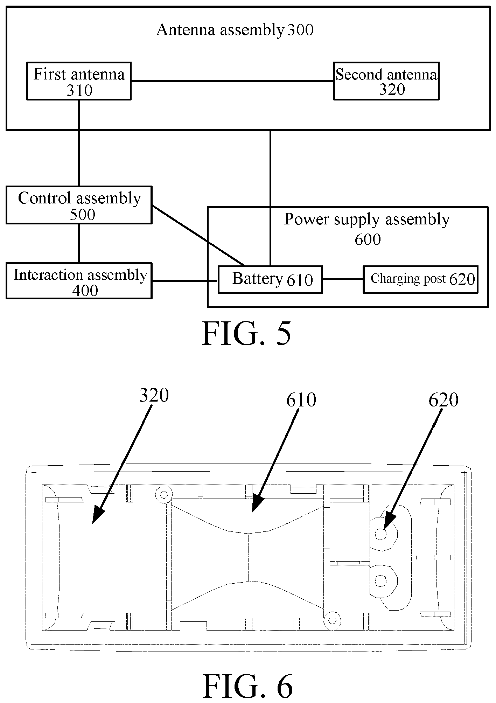

In one embodiment of the present disclosure, the lower housing assembly 200 includes a lower housing body. As shown in FIG. 5, the wearable device further includes a power supply assembly 600. The power supply assembly 600 includes a battery 610 and a charging pole 620. As shown in FIG. 6, both the battery 610 and the charging post 620 are disposed on the lower housing body. The battery is used to charge the antenna assembly 300, the interaction assembly 400, and the control assembly 500. The charging post 620 is used to charge the battery 610 through an external power source.

The battery 610 is a rechargeable lithium polymer battery, and the capacity of the battery 610 is greater than or equal to 70 mAh to meet basic requirements for standby duration. The battery 610 is a customized small-sized battery with high-energy density, so that a preset spacing is provided between the battery 610 and the second antenna 320, thereby ensuring the performance of the first antenna 310 and the second antenna 320.

In one specific embodiment of the present disclosure, as shown in FIG. 2, when style designing is performed, the bracelet needs to have an arc-shaped appearance to fit a wrist of a user. Therefore, a circuit board in the bracelet may be a rigid-flex board to make the most of internal space for structural stacking and to allow a reasonable spacing to be reserved between internal components. In addition, a shielding case may be additionally provided for radiant parts in the circuit to prevent electromagnetic radiation from affecting the performance of the antenna. In other embodiments of the present disclosure, the wearable device may further be a smart watch, smart glasses, or the like, and the wearable device needs to meet requirements of the user for normal wearing during shape designing to facilitate use by the user.

According to the wearable device with the vehicle searching function of the embodiment of the present disclosure, the antenna assembly includes the first antenna and the second antenna, the first antenna being constructed as an annular frame of the upper housing assembly, and the second antenna being disposed between the upper housing assembly and the lower housing assembly. The control assembly may generate the vehicle searching instruction according to the user instruction, and control, according to the vehicle searching instruction, the first antenna to send the high-frequency signal to the vehicle, and the vehicle sends corresponding response information (for example, the vehicle flashes a headlamp and a tail lamp or makes a sound) after receiving the high-frequency signal, thereby implementing the vehicle searching function. Therefore, the user can find his/her own vehicle quickly at a greater distance, greatly improving user experience.

In other embodiments of the present disclosure, in addition to the vehicle searching function of the foregoing embodiment, the wearable device with the vehicle searching function in the embodiment of the present disclosure may further have functions such as keyless entry into a vehicle, incoming call display, and answering/making a call.

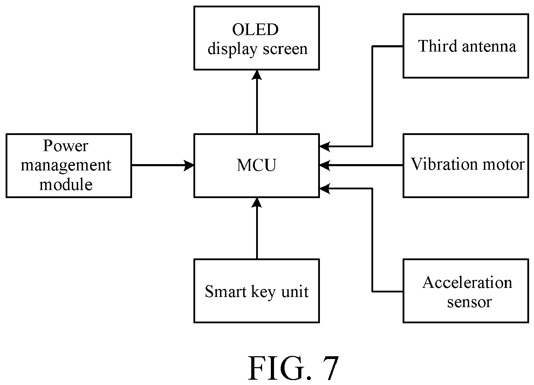

Specifically, as shown in FIG. 7, the wearable device with the vehicle searching function in the embodiment of the present disclosure may further include an acceleration sensor and a vibration motor.

The acceleration sensor may be configured to obtain acceleration information, for example, may detect, according to a movement state of a user carrying the wearable device, a number of walking and running times of the user. The vibration motor may be configured to send a vibration reminder, for example, may vibrate when a call is answered and/or a message is received at a mobile terminal. The third antenna is used for wireless connection with a mobile terminal (such as a mobile phone) to communicate with the mobile terminal.

Further, the wearable device with the vehicle searching function in the embodiment of the present disclosure may further include a power management module, a smart key unit, and the like. The power management module may detect an electric quantity of the wearable device in real time, and display, on an Organic Light-Emitting Diode (OLED) display screen, a number or a percentage corresponding to a current electric quantity through a Micro Control Unit (MCU) (that is, the control assembly 500 in the foregoing embodiment). The smart key unit includes not only an antenna assembly for implementing a long-distance vehicle searching function, but also includes other functional modules to achieve corresponding functions. For example, the smart key unit may be further configured to unlock/lock a vehicle in a manner such as wireless communication when a user does not take a vehicle key, and control the vehicle to start/stop.

In the description of the present disclosure, it should be understood that orientation or position relationships indicated by the terms such as "center", "vertical", "horizontal", "length", "width", "thickness", "above", "below", "front", "rear", "left", "right", "vertical", "horizontal", "top", "bottom", "inside", "outside", "clockwise", "counterclockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In addition, terms "first" and "second" are only used to describe the objective and cannot be understood as indicating or implying relative importance or implying a quantity of the indicated technical features. In view of this, a feature defined to be "first" or "second" may explicitly or implicitly include one or more features. In the descriptions of the present disclosure, "a plurality of" means two or more, unless otherwise definitely and specifically limited.

In the present disclosure, unless otherwise explicitly specified or defined, the terms such as "mount", "install", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components or interaction between two components. Persons of ordinary skill in the art may understand the specific meanings of the foregoing terms in the present disclosure according to specific situations.

In the present disclosure, unless otherwise explicitly specified or defined, the first feature being located "above" or "below" the second feature may be the first feature being in a direct contact with the second feature, or the first feature being in an indirect contact with the second feature through an intermediary. In addition, the first feature being located "above" the second feature may be the first feature being located directly above or obliquely above the second feature, or may simply indicate that the first feature is higher in level than the second feature. The first feature being located "below" the second feature may be the first feature being located directly below or obliquely below the second feature, or may simply indicate that the first feature is lower in level than the second feature.

In the descriptions of this specification, descriptions using reference terms "an embodiment", "some embodiments", "an example", "a specific example", or "some examples" mean that specific characteristics, structures, materials, or features described with reference to the embodiment or example are included in at least one embodiment or example of the present disclosure. In this specification, schematic descriptions of the foregoing terms do not necessarily directed at a same embodiment or example. In addition, the described specific features, structures, materials, or features can be combined in a proper manner in any one or more embodiments or examples. In addition, in a case that is not mutually contradictory, a person skilled in the art can combine or group different embodiments or examples that are described in this specification and features of the different embodiments or examples.

Although the embodiments of the present disclosure are shown and described above, it can be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

1. A wearable device with a vehicle searching function, comprising:
an upper housing assembly;
a lower housing assembly;
an antenna assembly comprising a first antenna and a second antenna, the first antenna being constructed as an annular frame of the upper housing assembly, the second antenna being disposed between the upper housing assembly and the lower housing assembly, a projection area of the second antenna on the upper housing assembly being located within the annular frame constructed by the first antenna, and the second antenna being configured to activate a transmission function of the first antenna after receiving a control signal sent by a vehicle;
an interaction assembly configured to receive a user instruction; and
a control assembly configured to generate a vehicle searching instruction according to the user instruction, and control, according to the vehicle searching instruction, the first antenna to send a high-frequency signal to the vehicle, to implement the vehicle searching function.

2. The wearable device with the vehicle searching function according to claim 1, wherein the interaction assembly comprises a touch button and receives the user instruction according to a touch operation performed by a user on the touch button.

3. The wearable device with the vehicle searching function according to claim 1 or 2, wherein the annular frame constructed by the first antenna comprises at least one opening passing through an outer ring and an inner ring of the annular frame.

4. The wearable device with the vehicle searching function according to any of claims 1 to 3, wherein the interaction assembly further comprises a display screen, and the control assembly is further configured to control, according to the user instruction, the display screen to display a vehicle searching interface.

5. The wearable device with the vehicle searching function according to claim 4, wherein the display screen and the second antenna are disposed in different areas and different planes on a circuit board in the wearable device, the display screen being disposed on one side of the circuit board close to the upper housing assembly, and the second antenna being disposed on one side of the circuit board close to the lower housing assembly.

6. The wearable device with the vehicle searching function according to any of claims 1 to 5, wherein the wearable device further comprises:
a third antenna disposed within the annular frame constructed by the first antenna and configured to communicate with a mobile terminal;
an acceleration sensor configured to obtain acceleration information; and
a vibration motor configured to send a vibration reminder.

7. The wearable device with the vehicle searching function according to claim 5, wherein the circuit board is a rigid-flex board.

8. The wearable device with the vehicle searching function according to claim 3, wherein the second antenna is disposed in an area away from the opening.

9. The wearable device with the vehicle searching function according to claim 6, wherein the upper housing assembly further comprises a bottom bracket located within the annular frame, and the third antenna is printed on the bottom bracket.

10. The wearable device with the vehicle searching function according to any of claims 1 to 9, wherein the lower housing assembly comprises a lower housing body, and the wearable device further comprises a power supply assembly, the power supply assembly comprising a battery and a charging post, both the battery and the charging post being disposed on the lower housing body, the battery being configured to charge the antenna assembly, the interaction assembly, and the control assembly, and the charging post being configured to charge the battery through an external power source.

11. The wearable device with the vehicle searching function according to claim 10, wherein a preset spacing is provided between the battery and the second antenna.

12. The wearable device with the vehicle searching function according to any of claims 1 to 11, wherein the wearable device is a bracelet.

13. A wearable device with a vehicle searching function, comprising:
an upper housing assembly;
a lower housing assembly;
an antenna assembly comprising a first antenna and a second antenna, the first antenna being constructed as an annular frame of the upper housing assembly, the second antenna being disposed between the upper housing assembly and the lower housing assembly, a projection area of the second antenna on the upper housing assembly being located within the annular frame constructed by the first antenna, and the second antenna being configured to determine, according to the activation request signal after receiving an activation request signal sent by a vehicle, whether the wearable device matches the vehicle, and activate a transmission function of the first antenna after determining that the wearable device matches the vehicle;
an interaction assembly configured to receive a user instruction; and
a control assembly configured to generate a vehicle searching instruction according to the user instruction, and control, according to the vehicle searching instruction, the first antenna to send a high-frequency signal to the vehicle, to implement the vehicle searching function.
